# DEMANDE DE BREVET EUROPEEN

(11) **EP 2 131 142 A1**
(43) Date de publication de la demande: **09.12.2009**
(21) Numéro de dépôt: 09160783.8
(22) Date de dépôt: 20.05.2009
(51) Int. Cl.: G01B 7/00

(54) **Dispositif de détection de position d'un mécanisme mobile se trouvant dans un carter contenant de l'huile**

(30) Priorité: 03.06.2008 FR 0853658
(71) Demandeur: PEUGEOT CITROËN AUTOMOBILES S.A., 78140 Vélizy Villacoublay (FR)
(72) Inventeur: Ploe, Pierre, 92800, PUTEAUX (FR)

(57) **Abrégé**

Dispositif de détection de position d'un mécanisme mobile se trouvant dans un carter (70) contenant de l'huile, ce dispositif comprenant une cible (30) liée au mécanisme mobile, dont une face avant d'extrémité (42) vient en regard suivant un mouvement latéral, d'une face avant d'extrémité d'un capteur (26) comportant un aimant avec interposition d'un jeu entre ces deux faces, pour détecter une position du mécanisme mobile, **caractérisé en ce que** la partie d'extrémité de la cible (30) est entourée par une protection (40) formée d'une matière non magnétique, comportant une face avant (42) qui prolonge celle de la cible et recouvre sensiblement la face avant du capteur quand ces deux faces avant sont en regard.

## Description

La présente invention concerne un dispositif de détection de position d'un mécanisme mobile dans un carter contenant de l'huile, en particulier pour une commande interne de boîte de vitesses de véhicule automobile, comprenant un capteur de position pour déterminer des positions particulières de la commande.

Les boîtes de vitesses manuelles des véhicules automobiles comportent un arbre primaire lié au moteur du véhicule par un embrayage, et au moins un arbre parallèle récepteur lié aux roues motrices du véhicule. Ces arbres peuvent être reliés entre eux par des couples de pignons formant chacun un engrenage transmettant le mouvement d'un arbre à l'autre suivant différents rapports de démultiplication, et correspondant respectivement à autant de rapports de vitesse.

Un des pignons de chaque engrenage est solidaire d'un des arbres, l'autre pignon de l'engrenage monté libre en rotation sur l'autre arbre, peut être rendu solidaire de son arbre par le coulissement axial d'un manchon de synchronisation réalisant une synchronisation des vitesses par un dispositif de frottement, puis un crabotage assurant la solidarisation du pignon.

Pour l'engagement des rapports de vitesse, un levier de vitesse manoeuvré par le conducteur réalise un mouvement de sélection pour sélectionner un des axes portant une fourchette de commande d'un manchon de synchronisation, puis un mouvement de passage pour engager un rapport de vitesse par un coulissement axial de cette fourchette.

Une position particulière de la commande de boîte de vitesses correspond au point mort où aucun rapport de vitesse n'est engagé.

Les véhicules récents peuvent comporter des systèmes de démarrage automatisé du moteur thermique, comprenant par exemple une commande de démarrage par bouton poussoir, ou un alternateur-démarreur qui arrête et remet automatiquement en marche le moteur lors d'un arrêt prolongé du véhicule (système Stop et Start « STT »).

Ces systèmes de démarrage automatisé mettent en oeuvre une séquence pilotée par un calculateur électronique, qui lance un cycle de démarrage. Ce lancement nécessite la présence d'un système de sécurité garantissant qu'aucun rapport de vitesse ne soit engagé au préalable, ni ne s'engage pendant son déroulement. Ce système de sécurité comprend une détection de la position du point mort de la commande interne de la boîte de vitesses, cette détection devant être particulièrement fiable.

Suivant une disposition connue présentée notamment dans le document FR-A1-2902853, un capteur de position est fixé sur un carter de la boîte de vitesses, et une cible axiale métallique est fixée radialement sur un axe de commande réalisant des mouvements de translation ou de rotation, pour effectuer une sélection ou un passage des rapports de vitesse. Suivant la position de l'axe de commande, la cible axiale peut s'aligner sur le capteur, en particulier dans une position de point mort, sa face avant d'extrémité axiale formant une cible qui est détectée par ce capteur.

On obtient ainsi une information qui confirme une position bien définie de l'axe de commande, et donc d'un état des rapports engagés.

Dans le cas où on utilise un capteur comportant un aimant, par exemple un capteur à effet Hall mesurant une variation de champ magnétique lors des déplacements d'une cible en face de l'aimant, un inconvénient principal est que cet aimant peut récupérer de la limaille métallique générée par l'usure de composants dans la boîte de vitesses et brassée par l'huile de lubrification, qui vient se coller dessus.

Cette limaille métallique peut venir perturber le signal lu par le capteur, et induire des erreurs.

La présente invention a notamment pour but d'éviter ces inconvénients de la technique antérieure, et de proposer un moyen simple et efficace, permettant de réduire les risques de perturbation du signal du capteur.

Elle propose à cet effet un dispositif de détection de position d'un mécanisme mobile se trouvant dans un carter contenant de l'huile, ce dispositif comprenant une cible dont une face avant d'extrémité vient en regard suivant un mouvement latéral, d'une face avant d'extrémité d'un capteur comportant un aimant avec interposition d'un jeu entre ces deux faces, pour détecter une position du mécanisme mobile, **caractérisé en ce que** la partie d'extrémité de la cible est entourée par une protection formée d'une matière non magnétique, comportant une face avant qui prolonge celle de la cible et recouvre sensiblement la face avant du capteur quand ces deux faces avant sont en regard.

Un avantage du dispositif de détection selon l'invention est que la protection venant recouvrir la face avant du capteur par un mouvement latéral, on peut évacuer de la limaille qui se serait déposée sur cette face.

Le dispositif de détection selon l'invention peut en outre comporter une ou plusieurs des caractéristiques suivantes, qui peuvent être combinées entre elles

Avantageusement, la face avant d'extrémité de la cible avec sa protection forme une surface lisse et continue qui est complémentaire avec la face avant d'extrémité du capteur, et peut comporter une courbure de manière à disposer en tous points entre ces deux faces superposées d'un jeu réduit constant lors de petits mouvements du mécanisme.

Avantageusement, la protection comporte des petits rayons de raccordement entre sa face avant et les faces externes qui se raccordent sur cette face avant.

La protection peut être réalisée par surmoulage d'une matière non magnétique sur l'extrémité avant de la cible.

La cible peut comporter un axe comprenant des rainures annulaires remplies par la matière surmoulée.

La position axiale du capteur peut être réglable pour ajuster le jeu d'entrefer entre la face avant du capteur et celle de la cible.

Avantageusement, le dispositif de détection de position comporte un capteur à effet Hall.

Avantageusement, la cible est fixée sur une commande de boîte de vitesses d'un véhicule automobile, disposée dans un carter, pour déterminer une position de point mort de cette boîte de vitesses.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente en perspective une commande interne d'une boîte de vitesses comprenant un dispositif de détection selon l'art antérieur ;
- la figure 2 présente en vue de côté, le dispositif de détection selon l'art antérieur comprenant un capteur et une cible ;
- la figure 3 présente en perspective un dispositif de détection selon l'invention, comprenant un capteur et une cible équipée d'une protection, liée à un axe de passage ;
- la figure 4 présente en perspective la cible comportant une protection vue en coupe ; et
- la figure 5 présente en vue de côté, le dispositif de détection selon l'invention comprenant une cible et un capteur fixé dans un carter.

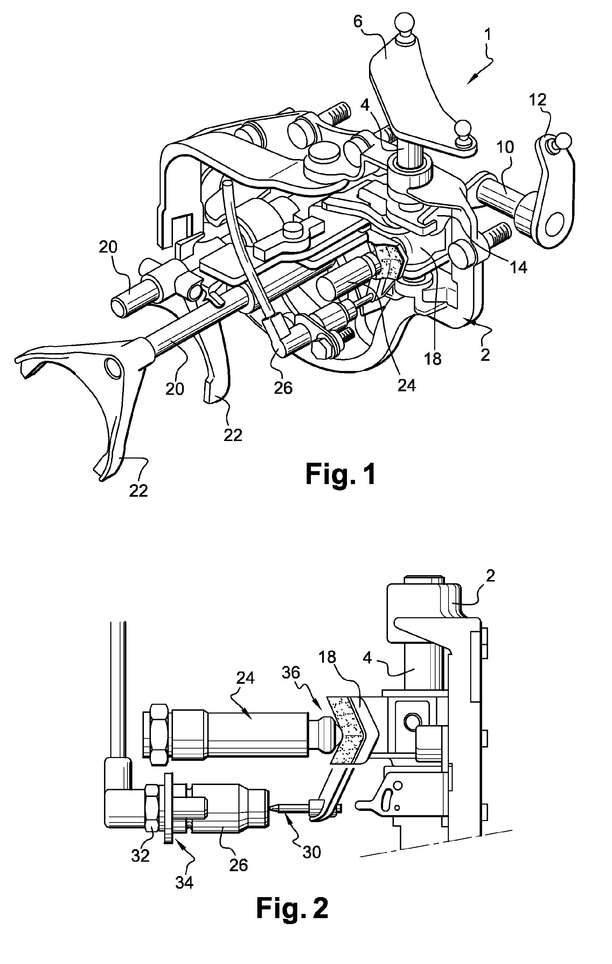

La figure 1 présente une commande interne 1 d'une boîte de vitesses comprenant un arbre primaire lié à un moteur par un embrayage, et un arbre secondaire disposé parallèlement et lié aux roues motrices du véhicules, ces arbres pouvant être reliés par différents rapports de vitesse formés par des engrenages engagés par des manchons de synchronisation.

Un support 2 fixé à l'intérieur du carter de la boîte de vitesses, supporte l'ensemble du dispositif de commande interne. Un axe de passage 4 disposé verticalement, reçoit à son extrémité supérieure sortant de la boîte de vitesses, un bras de commande 6 comportant une rotule reliée au mouvement de passage du levier de changement de vitesse actionné par le conducteur.

Pour la description de l'ensemble des figures, l'axe de passage 4 est considéré comme étant toujours disposé verticalement suivant la représentation de la figure 1, alors que dans le véhicule il pourrait avoir une autre inclinaison.

Un axe de sélection 10 disposé horizontalement, reçoit à son extrémité extérieure sortant de la boîte de vitesses, un bras de commande 12 comportant une rotule reliée au mouvement de sélection du levier de changement de vitesse, et à son extrémité intérieure, un bras de sélection 14 faisant coulisser verticalement une clé d'interverrouillage contenant un doigt de passage 18 lié en rotation à l'axe de passage 4.

Le doigt de passage 18 est ainsi mis successivement à la hauteur de moyens d'entraînement de différents axes 20 supportant des fourchettes 22 ainsi que leur noix de fourchette, ces noix étant superposées face au doigt de passage des vitesses. La clé d'interverrouillage comporte des formes qui après la sélection d'une noix de fourchette, empêchent un mouvement accidentel des autres noix par un pivotement du doigt de passage 18 qui serait mal positionné en hauteur, pour éviter un passage simultané de deux rapports.

La commande de boîte 1 comporte un verrouillage à bille 24 lié au carter de boite de vitesse 70, comprenant une bille de positionnement du doigt de passage 18 dans des positions définies. La commande de boîte de vitesses comporte de plus un capteur de position 26.

La figure 2 présente le doigt de passage 18 comprenant des surfaces inclinées 36 sur lesquelles presse la bille du dispositif de verrouillage 24, poussée par un ressort, pour maintenir en particulier la position de point mort.

Le doigt de passage 18 comporte un bras incliné, au bout duquel se trouve une cible 30 formée d'un axe sensiblement cylindrique disposé radialement par rapport à l'axe de passage 4. Cette cible 30 décrit un mouvement longitudinal suivant l'axe de passage 4 lors des mouvements de sélection, et un mouvement angulaire centré sur cet axe de passage lors des mouvements de passage.

Dans une position de point mort qui est maintenue par le verrouillage à bille 24, l'axe de la cible 30 est aligné sur l'axe de la partie cylindrique du capteur 26, sa face d'extrémité avant venant en face de celle du capteur, avec interposition d'un petit jeu d'entrefer.

De préférence ce jeu d'entrefer est le plus faible possible pour apporter une plus grande sensibilité au capteur, et obtenir une information plus fiable.

Le capteur 26 est à effet Hall, son extrémité avant comportant un aimant, il détecte sans contact et donc sans usure, la proximité de la face d'extrémité avant métallique de la cible 30 pour envoyer une information de position du doigt de passage 18 correspondant au point mort, à un calculateur électronique non représenté, et permettre d'effectuer certaines opérations comme par exemple le démarrage du moteur thermique.

Un problème qui se pose est que malgré généralement la présence d'un aimant sur le bouchon d'huile de la boîte de vitesses pour récupérer la limaille issue de l'usure des pièces internes de la boîte de vitesses, il peut rester une limaille fine en suspension ou en transition dans l'huile continuellement brassée lors du roulage, qui est projetée est vient se coller sur l'aimant du capteur 26.

Cette limaille peut venir s'intercaler dans le jeu d'entrefer ce qui lors des mouvements de sélection ou de passage, d'une part crée un frottement par la limaille interposée, et d'autre part perturbe la valeur de l'entrefer et donc la mesure effectuée par le capteur 26.

Une solution pour réduire les risques de frottement, consiste à augmenter la valeur de l'entrefer. Or cette valeur dépend dans le cas d'un montage sans réglage, d'un empilage de tolérances venant de dispersions dans la fabrication industrielle des différents composants interposés entre le capteur 26 et la cible 30. Le risque est alors qu'avec les tolérances les plus fortes, la valeur de l'entrefer devienne élevée, ce qui peut nuire à la qualité du signal.

Pour réduire la valeur de l'entrefer, on peut réaliser un calage particulier de la position axiale du capteur. On peut notamment dans le cas d'un capteur 26 traversant le carter de la boîte de vitesses, après un mesure du jeu d'entrefer résultant, sélectionner une épaisseur de cale et l'interposer entre une face avant d'appui 34 du support du capteur qui est perpendiculaire à l'axe, et une face extérieure du carter, pour ajuster cette valeur d'entrefer.

Toutefois cette opération est relativement longue et coûteuse. De plus elle comporte des risques d'erreurs lors du premier montage en usine, ou lors d'un intervention de maintenance.

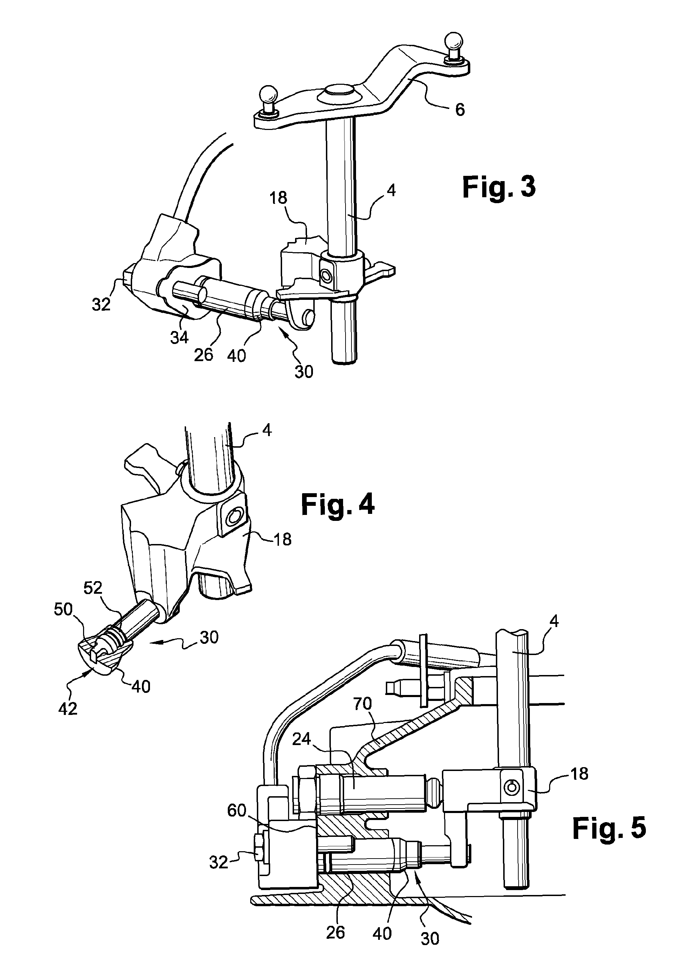

Les figures 3 et 4 détaillent une cible 30 de capteur suivant l'invention. La cible 30 comporte une extrémité avant 50 qui dans ce cas comprend une forme allongée suivant l'axe de passage 4, et une largeur réduite suivant une direction transversale. Axialement en arrière de cette extrémité avant 50 de la cible 30, se trouvent deux rainures annulaires 52.

Un surmoulage 40 d'une matière non magnétique, qui dans cet exemple est un polyamide, comporte une forme circulaire suivant l'axe de la cible 30, et entoure la partie d'extrémité 50 de cette cible. En partant de la face avant 42 de la cible 30, on a une première longueur cylindrique avec un diamètre plus important constituant la protection, puis une deuxième longueur cylindrique avec un diamètre réduit, raccordée à la première par une forme conique, constituant une partie d'accrochage comportant de la matière qui remplit les rainures annulaires 52.

La face avant d'extrémité de l'ensemble forme une surface lisse et continue, les deux surfaces de la cible 30 et du surmoulage 40 se prolongeant. Par ailleurs, cette face avant de l'ensemble peut former une surface courbe comportant une génératrice parallèle à l'axe de passage 4, et un léger bombé suivant un arc de cercle centré sur cet axe de passage.

De même, la face avant du capteur 26 peut aussi être légèrement bombée en creux suivant un arc de cercle centré sur l'axe de passage 4, pour former une surface complémentaire dont les contours extérieurs s'ajustent sur ceux de la cible quand elle est alignée sur le capteur, et de manière à disposer en tous points entre ces deux faces, au cours des petits débattements angulaires de la cible pendant les différents mouvements, d'un jeu constant.

Le fonctionnement du dispositif de détection est le suivant. Lors des mouvements de sélection ou de passage autour du point mort, la face avant de la protection 40 vient balayer transversalement la face avant du capteur 26 suivant toute sa largeur, ce qui repousse et décroche la limaille attirée par l'aimant, qui aurait pu se déposer sur la face avant de ce capteur.

De plus un petit rayon de raccordement entre la face avant de la protection 40 et sa face externe cylindrique, aide au décrochage de la limaille pendant les mouvements d'approche. Par ailleurs une fois la cible 30 alignée sur le capteur 26, toute la face avant de ce capteur étant couverte par la protection 40, la limaille ne peut plus se déposer dans cette position.

La figure 5 présente un carter 70 comprenant deux alésages parallèles, recevant le verrouillage à bille 24, et le capteur 26 fixé par une vis 32 disposée parallèlement à l'axe du capteur, et serrant sur une face extérieure du carter une face d'appui 34 du support du capteur, perpendiculaire à son axe.

On peut aussi en combinaison avec l'invention interposer sur cette face d'appui une cale d'épaisseur calibrée, après un calcul de l'entrefer résultant à partir de mesures effectuées sur une boîte de vitesses et son capteur 26, pour obtenir un jeu d'entrefer ayant une valeur très réduite. Ce jeu très réduit est d'autant plus facile à mettre en oeuvre, dans la mesure ou très peu de limaille peut se déposer sur le capteur 26 grâce au dispositif suivant l'invention.

On réalise ainsi facilement et de manière économique, une limitation de la limaille déposée sur le capteur 26. En variante la protection 40 peut comprendre d'autres formes, comportant par exemple un contour externe de section carrée ou rectangulaire, qui s'ajuste sur le contour du capteur 26.

On notera que la protection 40 exerce une protection de la cible 30 qui comporte de préférence pour une meilleure précision de la détection de position, des arrêtes vives entourant la face avant. La protection 40 évite lors de manipulations au montage ou en maintenance, d'abîmer ces arrêtes ou de modifier la géométrie de la cible 30

Par ailleurs le protection 40 protège aussi les opérateurs de ces arrêtes vives pour éviter de se blesser, lors du montage sur les chaînes d'assemblage, ou d'opérations de maintenance.

La protection 40 de la cible 30 suivant l'invention, peut rendre possible l'utilisation d'un capteur à effet Hall comportant des caractéristiques intéressantes, dans une boîte de vitesses, ce qui généralement pose des problèmes.

D'une manière générale et dans le cadre de l'invention, les structures peuvent être inversée. On peut par exemple réaliser pour le doigt de passage 18, une rotation pour la sélection et un coulissement pour le passage des rapports de vitesse. On peut aussi avoir un capteur mobile se déplaçant devant une cible fixe.

## Revendications

1. Dispositif de détection de position d'un mécanisme mobile se trouvant dans un carter (70) contenant de l'huile, ce dispositif comprenant une cible (30) dont une face avant d'extrémité (42) vient en regard suivant un mouvement latéral, d'une face avant d'extrémité d'un capteur (26) comportant un aimant avec interposition d'un jeu entre ces deux faces, pour détecter une position du mécanisme mobile, **caractérisé en ce que** la partie d'extrémité de la cible (30) est entourée par une protection (40) formée d'une matière non magnétique, comportant une face avant (42) qui prolonge celle de la cible et recouvre sensiblement la face avant du capteur quand ces deux faces avant sont en regard.

2. Dispositif de détection de position selon la revendication 1, **caractérisé en ce que** la face avant d'extrémité de la cible (30) avec sa protection (40), forme une surface lisse et continue qui est complémentaire avec la face avant d'extrémité du capteur (26), et peut comporter une courbure de manière à disposer en tous points entre ces deux faces superposées d'un jeu réduit constant lors de petits mouvements du mécanisme.

3. Dispositif de détection de position selon la revendication 2, **caractérisé en ce que** la protection (40) comporte des petits rayons de raccordement entre sa face avant (42), et les faces externes qui se raccordent sur cette face avant.

4. Dispositif de détection de position selon l'une quelconque des revendications précédentes, **caractérisé en ce que** la protection (40) est réalisée par surmoulage d'une matière non magnétique sur l'extrémité avant de la cible (30).

5. Dispositif de détection de position selon la revendication 4, **caractérisé en ce que** la cible (30) comporte un axe comprenant des rainures annulaires (52) remplies par la matière surmoulée.

6. Dispositif de détection de position selon l'une quelconque des revendications précédentes, **caractérisé en ce que** la position axiale du capteur (26) est réglable pour ajuster le jeu d'entrefer entre la face avant du capteur et celle de la cible (30).

7. Dispositif de détection de position selon l'une quelconque des revendications précédentes, **caractérisé en ce qu'**il comporte un capteur (26) à effet Hall.

8. Dispositif de détection de position selon l'une quelconque des revendications précédentes, **caractérisé en ce que** la cible (30) est fixée sur une commande (18) de boîte de vitesses d'un véhicule automobile, disposée dans un carter (70), pour déterminer une position de point mort de cette boîte de vitesses.
